**Europäisches Patentamt**

**European Patent Office**

**Office européen des brevets**

(11) Veröffentlichungsnummer: **0 161 034**

**A2**

## (12) EUROPÄISCHE PATENTANMELDUNG

(21) Anmeldenummer: **85200656.8**

(22) Anmeldetag: **29.04.85**

(51) Int. Cl.⁴: **H 04 J 3/06**

(30) Priorität: **05.05.84 DE 3416610**

(43) Veröffentlichungstag der Anmeldung:
**13.11.85 Patentblatt 85/46**

(84) Benannte Vertragsstaaten:
**DE FR GB IT SE**

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**FR GB IT SE**

(72) Erfinder: **Jasmer, Wolfgang**
**Dachsberg 13b**
**D-2000 Hamburg 61(DE)**

(72) Erfinder: **Killat, Ulrich, Dr.**
**Achter Lüttmoork 2c**
**D-2000 Hamburg 56(DE)**

(72) Erfinder: **Krüger, Johan**
**Alter Holf 3**
**D-2085 Quickborn(DE)**

(74) Vertreter: **Poddig, Dieter et al,**
**Philips Patentverwaltung GmbH Billstrasse 80 Postfach**
**10 51 49**
**D-2000 Hamburg 28(DE)**

(54) **Pufferspeicher für eine Eingangsleitung einer digitalen Vermittlungsstelle.**

(57) Ein Pufferspeicher für eine Eingangsleitung einer digitalen Vermittlungsstelle dient dazu, die gegenüber dem lokalen Takt der Vermittlungsstelle mit großen Phasenschwankungen behafteten Eingangsdaten an diesen lokalen Takt anzupassen. Dazu müssen die Eingangsdaten mit ihrem zugehörigen Takt in den Puffer eingeschrieben und mit dem lokalen Takt ausgelesen werden. Abhängig von den Phasenverschiebungen können dabei Schreib- und Lesevorgänge im Grenzfall gleichzeitig auftreten. Um trotzdem konventionelle Speicherbausteine verwenden zu können, wird der Pufferspeicher aus einer Anzahl Speicherblocke mit je einer gleichen Anzahl von Adressenstellen aufgebaut, wobei die Speicherblöcke normalerweise zyklisch aufeinander folgend adressiert werden. Durch eine Adressenabstandsuberwachung wird erreicht, daß Lese- und Schreibvorgänge stets nur in verschiedenen Speicherblöcken auftreten, so daß sie gleichzeitig erfolgen können. Wenn sich Lese- und Schreibadresse infolge langfristiger großer Phasenschwankungen un mehr als die Adressenstellen eines Speicherblockes nähern, so daß die Gefahr besteht, daß in einem Speicherblock gleichzeitig ein Schreibvorgang und ein Lesevorgang auftritt, wird durch einen Leseadressensprung ein folgender oder vorhergehender Speicherblock adressiert, um damit den Adressenabstand wieder zu vergrößern. Dieser Adressensprung erfolgt nur bei bzw. unmittelbar nach dem Übergang insbesondere der Leseadresse von einem Speicherblock auf einen anderen.

./...

Fig.1

"Pufferspeicher für eine Eingangsleitung einer digitalen
Vermittlungsstelle"

Die Erfindung betrifft einen Pufferspeicher für eine
Eingangsleitung einer digitalen Vermittlungsstelle zum
Ausgleich von Phasenschwankungen (Wander und Jitter)
zwischen dem von den Eingangsdaten auf der Eingangsleitung
mitgeführten Datentakt und dem lokalen Takt der
Vermittlungsstelle, mit einer Schreib-Lese-
Steuereinrichtung, die die ankommenden Daten mit dem
Datentakt aufeinanderfolgend in den Pufferspeicher
einschreibt und mit dem lokalen Takt zeitlich verschoben
ausliest, und mit einer Abstandsüberwachungseinrichtung,
die den Abstand zwischen derjenigen Speicherstelle, die zu
einem bestimmten Zeitpunkt geschrieben wird, und derjenigen Speicherstelle, die im wesentlichen gleichzeitig
gelesen wird, überwacht und bei Unterschreiten dieses
Abstandes unter einen vorgegebenen Wert durch Überspringen
einer Anzahl Speicherstellen beim Schreiben und/oder Lesen
den Abstand wieder vergrößert.

Derartige Pufferspeicher sind erforderlich, um die von
einer anderen Vermittlungsstelle kommenden Eingangsdaten,
deren Datentakt aus dem Eingangssignal selbst oder von
einer gesonderten Taktleitung abgeleitet wird, an den
lokalen Takt der Vermittlungsstelle anzupassen. Diese
beiden Takte sind zueinander nicht synchron, selbst wenn
beide Vermittlungsstellen von dem selben Muttertakt
gesteuert werden. Durch die Datenübertragungsstrecke
zwischen der sendenden und der empfangenden Vermittlungsstelle treten Phasenschwankungen auf, von denen die kurzfristigen Phasenschwankungen, deren Wert meist gering ist,
als "Jitter" bezeichnet werden, denen längerfristige
Phasenschwankungen überlagert sind, die mit "Wander" bezeichnet werden. Diese letzteren Phasenschwankungen können besonders bei langen Übertragungsstrecken und hohen Datenübertragungsgeschwindigkeiten große Werte annehmen, d.h. ein Vielfaches des Datentaktes betragen. Wenn in der Eingangsleitung einer digitalen Vermittlungsstelle ein Pufferspeicher eingesetzt wird, dessen Kapazität größer ist als den vorkommenden Phasenschwankungen entspricht, gehen im Falle eines Vermittlungsnetzes mit zentraltaktgesteuerten Vermittlungsstellen keine Daten bei der Anpassung des Datentaktes von ankommenden Eingangsdaten auf den lokalen Takt einer Vermittlungsstelle verloren. Bei nicht synchronen Vermittlungsnetzen lassen sich Datenverlust bzw. Lücken im Datenstrom durch Anwendung von Stopfverfahren vermeiden, wobei die stetige Phasenverschiebung durch einen Frequenzversatz normalerweise sehr viel geringer ist als die durch den Einfluß der Übertragungsstrecke erzeugten Phasenschwankungen, so daß auch hier die Kapazität des Pufferspeichers mindestens den Datenschwankungen entsprechen sollte. In jedem Falle muß zumindest zeitweise bei einem solchen Pufferspeicher gleichzeitig eingeschrieben und ausgelesen werden können. Dies erfolgt durch das Konzept der sogenannten elastischen Speicher.

Ein Pufferspeicher der eingangs genannten Art ist bekannt aus der Dissertation "Synchronisationsmöglichkeiten für digitale Breitbandnetze mit Zeitmultiplextechnik" von Helmut Kliem, Technische Universität Braunschweig, 1982. Dieser bekannte Pufferspeicher besteht aus zwei Teilen, nämlich einem elastischen Speicher mit sehr kleiner Kapazität, bei dem im Grenzfall gleichzeitig an einer Adresse Eingangsdaten eingeschrieben und an einer anderen Adresse Daten ausgelesen werden können, und einem größeren Rahmenspeicher, dem die aus dem elastischen Speicher ausgelesenen Daten zugeführt werden und der diese Daten synchron mit dem lokalen Takt der Vermittlungsstelle

0161034

einschreibt und adressenversetzt ausliest, um sie der eigentlichen Vermittlung zuzuführen. Da bedingt durch die Phasenschwankungen zumindest kurzfristig der Datentakt höher sein kann als der lokale Takt der Vermittlungsstelle, müssen manchmal innerhalb einer Periode des lokalen Taktes zwei Eingangsdatenzeichen in den Rahmenspeicher eingeschrieben werden können. Der Betrieb des Rahmenspeichers erfolgt daher in der Weise, daß in jeder Periode des lokalen Taktes der Vermittlungsstelle zwei Schreibvorgänge und ein Lesevorgang an unterschiedlichen Adressen erfolgen kann. Die Zykluszeit des Rahmenspeichers muß daher kleiner sein als ein Drittel der Periode des lokalen Taktes der Vermittlungsstelle. Dies erfordert insbesondere bei sehr hohen Datenübertragungsgeschwindigkeiten sehr schnelle und daher teure Speicher, wobei außerdem die Aufteilung des gesamten Pufferspeichers in einen elastischen Speicher und in einen Rahmenspeicher eine umständliche und aufwendige Steuerung erfordert.

Aufgabe der Erfindung ist es, einen Pufferspeicher der eingangs genannten Art anzugeben, dessen Zykluszeit nicht kleiner sein muß als die volle Periode des lokalen Taktes und dessen Steuerung einfach und wenig aufwendig ist.

Diese Aufgabe wird erfindungsgemäß dadurch gelöst, daß der Pufferspeicher mehrere getrennt voneinander aufeinanderfolgend adressierbare Speicherblöcke enthält und daß die Abstandsüberwachungseinrichtung den Abstand zwischen dem Schreiben und dem Lesen nur beim Übergang mindestens eines der Vorgänge von dem einen Speicherblock auf einen anderen Speicherblock überwacht und bei Unterschreiten des vorgegebenen Abstandswertes in der Schreib-Lese-Steuereinrichtung einen derartigen Adressensprung in der Adressierung der Speicherblöcke auslöst, daß der Abstand zwischen dem Schreiben und dem Lesen vergrößert wird.

Durch die Aufteilung des Pufferspeichers in einzelne Speicherblöcke, die je beispielweise durch eine integrierte Schaltung oder eine Gruppe von integrierten Schaltungen gebildet sein können, und durch die erfindungsgemäße Steuerung des Schreibens und des Lesens wird erreicht, daß in einem Speicherblock entweder nur ein Schreibvorgang oder nur ein Lesevorgang auftreten kann, so daß für jeden dieser Vorgänge die volle Periode des lokalen Taktes der Vermittlungsstelle bzw. die volle Periode des Datentaktes der Eingangsdaten, die nur wenig voneinander abweichen, zur Verfügung steht.

Die Aufteilung eines Speichers in mehrere Speicherblöcke zur Durchführung von gleichzeitigen Schreib- und Lesevorgängen in verschiedenen Speicherblöcken ist grundsätzlich bekannt aus der EP-OS 26460. Bei diesem bekannten Pufferspeicher handelt es sich jedoch um einen Speicher für eine Datenverarbeitungsanlage, in der Speicher allgemein wahlfrei und nicht zyklisch adressiert werden. Aus diesem Grunde ist bei dem bekannten Pufferspeicher auch keine Adressenabstandsüberwachung vorhanden.

Aus der DE-PS 31 37 292 ist außerdem ein FIFO-Speicher bekannt, der mehrere Speicherbänke aufweist, in die bzw. aus denen unabhängig voneinander geschrieben bzw. gelesen werden kann. Dabei werden aufeinanderfolgend zugeführte Daten der jeweils folgenden Speicherbank zugeführt. Dadurch ist keine Abstandsüberwachung zwischen Lesen und Schreiben erforderlich, wobei jedoch das Lesen und das Schreiben durch das selbe Taktsignal gesteuert werden und synchron erfolgen.

Die Speicherblöcke in dem erfindungsgemäßen Pufferspeicher können verschieden aufgebaut sein, beispielsweise in Form von Schieberegistern oder CCD-Anordnungen. Dabei wird für das Schreiben und für das Lesen je ein Zähler verwendet, die ermitteln, ob der Speicherblock ganz mit Daten gefüllt bzw. vollständig ausgelesen ist und die ggf. das Umschalten auf einen anderen Speicherblock steuern. Eine andere Möglichkeit ist die Verwendung von wahlfrei adressierbaren Schreib-Lese-Speichern mit entsprechenden getrennten Adressensteuerungen für das Lesen und das Schreiben. Dabei ist nur eine einfache Adressensteuerung erforderlich, da alle Speicherblöcke untereinander in gleicher Weise adressiert werden.

Um zu verhindern, daß ein Speicherblock gleichzeitig zum Lesen und zum Schreiben adressiert wird, darf der vorgegebene Abstandswert zwischen dem Schreiben und dem im wesentlichen gleichzeitigen Lesen praktisch nicht kleiner als die Anzahl Daten eines Speicherblockes sein. Für eine optimale Ausnutzung ist es zweckmäßig, daß die Abstandsüberwachungseinrichtung bei gleichzeitiger Adressierung des selben Speicherblockes sowohl beim Schreiben als auch beim Lesen mindestens während des Bruchteils einer Taktperiode den Adressensprung auslöst. Der Bruchteil der Taktperiode wird zweckmäßig so klein gewählt, wie es die Schaltgeschwindigkeit der verwendeten Bauelemente zuläßt. Da sich die Phase des Datentaktes gegenüber der Phase des lokalen Taktes innerhalb der Adressenfolge eines Speicherblockes nur gering gegeneinander verschieben, kann dadurch eine Überlappung von Schreibvorgang und Lesevorgang innerhalb eines Speicherblockes um lediglich die Schaltverzögerung der für die Steuerung verwendeten Bauelemente auftreten, wobei diese Schaltverzögerung wesentlich geringer ist als die Zykluszeit der in den Speicherblöcken verwendeten Speicher, so daß diese Überlappung die einwandfreie Funktion des Speichers nicht beeinträchtigen kann.

Grundsätzlich kann der Adressensprung bei der Adressierung der Speicherblöcke sowohl bei den Schreibadressen als auch bei den Leseadressen durchgeführt werden, beispielsweise stets durch einen Rückwärtssprungder Adressen, die mit dem schnelleren Takt aufeinander folgen. Besonders vorteilhaft ist jedoch, wenn die Schreib-Lese-Steuereinrichtung den Adressensprung nur bei den Leseadressen durchführt. Dies ergibt eine besonders einfache Steuerung.

In Zeitmultiplexsystemen treffen die Eingangsdaten üblicherweise als aufeinanderfolgende Rahmen, bestehend aus jeweils einer gleichen Anzahl Datenbits sowie aus dazwischen angeordneten, die Rahmen bestimmende Synchronisierinformation ein. Für diesen Fall ist es zweckmäßig, daß der Adressensprung von Eingangsdaten an einer bestimmten Stelle eines Rahmens zu den Eingangsdaten an der gleichen bzw. folgenden Stelle eines anderen Rahmens erfolgt. Dadurch tritt bei einem Adressensprung keine Störung der Rahmenstruktur beim Auslesen auf, die eine Neusynchronisierung der Rahmentaktsteuerung erforderlich machen würde. Dabei ist es möglich, daß mehrere Rahmen von Eingangsdaten in einem Speicherblock gespeichert werden, so daß beim Adressensprung auf die gleiche bzw., da der Adressensprung in der Adressierung der Speicherblöcke mit dem Übergang von einer Adresse innerhalb des Speicherblockes auf die nächste im wesentlichen zusammenfallen sollte, auf die nächste Adresse des folgenden bzw. vorhergehenden Speicherblockes eine ganze Anzahl von Rahmen übersprungen werden. Andererseits kann aber auch die Kapazität bzw. die Anzahl der Adressen der Speicherblöcke so gewählt sein, daß ein Rahmen von Eingangsdaten mehrere Speicherblöcke genau ausfüllt. Dann muß der Adressensprung über eine entsprechende Anzahl von Speicherblöcken erfolgen. Grundsätzlich ist es jedoch auch möglich, daß aufeinanderfolgende Rahmengrenzen der Eingangsdaten nicht an den gleichen Adressen innerhalb der Speicherblöcke liegen. In diesem Falle ist dann außer einem Sprung in der Adressierung der Speicherblöcke auch ein entsprechender Adressensprung in den Adressen innerhalb der Speicherblöcke notwendig.

Ausführungsbeispiele der Erfindung werden nachstehend anhand der Zeichnung erläutert. Es zeigen

Fig. 1 ein Blockschaltbild des Pufferspeichers,
Fig. 2 ein Diagramm zur Erläuterung der aufeinanderfolgenden Adressierung der Speicherblöcke,
Fig. 3 einige Details der Adressenabstandsüberwachungseinrichtung und des Leseadressengenerators.

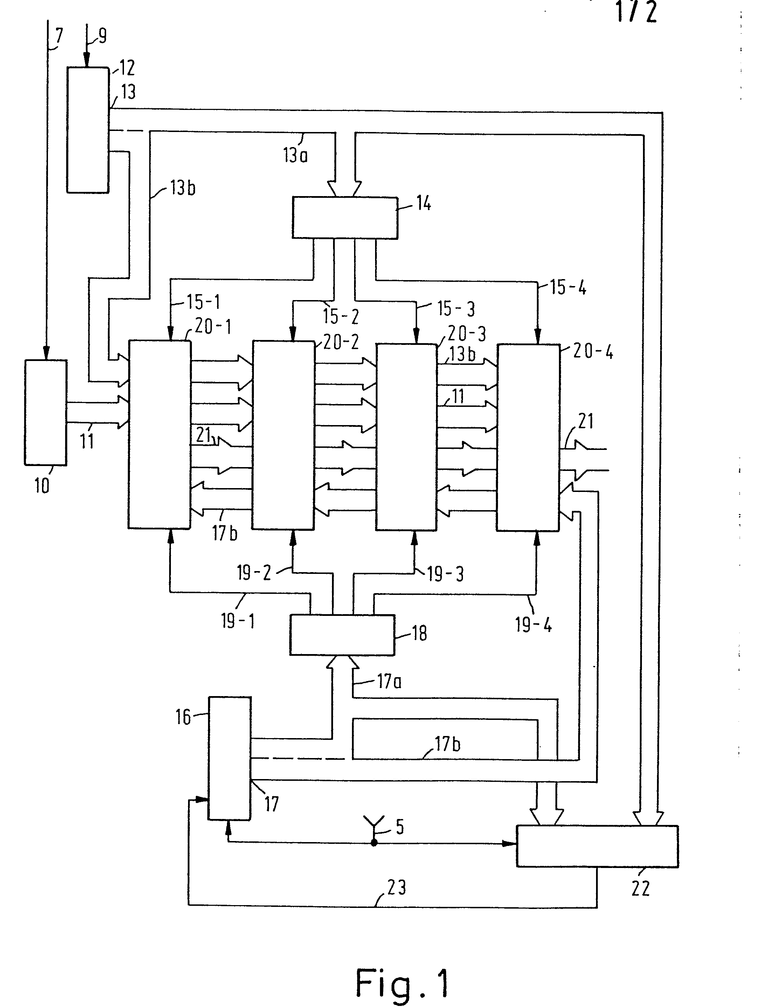

In Fig. 1 werden die seriell eintreffenden Eingangsdaten über die Leitung 7 einem Serien-Parallel-Wandler 10 zugeführt, der über die Verbindung 11 jeweils die zu einem Datenwort gehörenden Eingangsdaten parallel abgibt. Die Verbindung 11 besteht aus einer Anzahl paralleler Leitungen, was durch die doppelte Linie angedeutet ist. Auch die anderen, in Fig. 1 mit Doppellinien angegebenen Verbindungen bestehen tatsächlich aus einer Anzahl paralleler Leitungen zur parallelen Übertragung von Bitgruppen.

Auf der Leitung 9 erscheint immer dann ein Impuls, wenn der Serien-Parallel-Wandler 10 ein vollständiges Datenwort über die Verbindung 11 abgibt. Die Erzeugung dieses Impulses auf der Leitung 9 aus dem Datentakt, der durch entsprechende Kodierung bzw. Modulation der Eingangsdaten üblicherweise in dem Datensignal enthalten ist, erfolgt auf bekannte Weise und bildet keinen Teil der Erfindung.

Die Impulse auf der Leitung 9 werden einem Schreibadressengenerator 12 zugeführt, der zweckmäßig aus einem
Zähler oder einer Kette von Zählern besteht und der mit
diesen Impulsen zyklisch nacheinander alle Adressen erzeugt. Die Ausgänge der Zähler sind mit dem Ausgang 13 des
Schreibadressengenerators 12 verbunden, wo aufeinanderfolgende Adressen als parallele Bitgruppen erscheinen. Die
Bitgruppen niedrigerer Wertigkeit werden über die Verbindung 13b den Schreibadresseneingängen von vier Speicherblöcken 20-1 bis 20-4 zugeführt, und zwar den Adressen
aller Speicherblöcke parallel, was durch die durch die
Speicherblöcke unterbrochene Doppellinie der Verbindung
13b angedeutet ist. Dies gilt auch für die Verbindung 11,
die allen Schreibdateneingängen der Speicherblöcke 20-1
bis 20-4 zugeführt sind, für die Verbindung 21, die mit
allen Lesedatenausgängen der Speicherblöcke verbunden ist
sowie für die Verbindung 17b, die mit allen Leseadresseneingängen der Speicherblöcke 20-1 bis 20-4 parallel verbunden ist. In der Praxis können mehr Speicherblöcke verwendet werden.

Die Adressenbits höherer Wertigkeit werden über die
Verbindung 13a einem Decoder 14 zugeführt, der für jede
Bitkombination auf der Verbindung 13a ein entsprechendes
Signal auf einer seiner Ausgangsleitungen 15-1 bis 15-4
erzeugt, die mit einem Schreibsteuereingang je eines
Speicherblockes 20-1 bis 20-4 verbunden sind. Derjenige
der Speicherblöcke, dessen Schreibsteuereingang ein entsprechendes Signal zugeführt wird, schreibt die auf der
Verbindung 11 vorhandenen Daten an der über die Verbindung
13b zugeführte Adresse ein.

Ein Leseadressengenerator 16, der ebenso wie der Schreibadressengenerator 12 einen Zähler oder eine Kette von
Zählern enthalten kann, erhält über die Leitung 5 einen lokalen Worttakt, der aus dem lokalen Takt eines nicht näher dargestellten Taktgenerators der Vermittlungsstelle, in der der dargestellte Puffer angeordnet ist, abgeleitet ist, und schaltet mit jedem Impuls dieses lokalen Worttaktes auf die nächste Adresse, ebenso wie dies bei dem Schreibadressengenerator 12 durch die Impulse auf der Leitung 9 erfolgt. Am Ausgang 17 des Leseadressengenerators 16 erscheinen dann parallele Bitgruppen entsprechend aufeinanderfolgender Adressen. Die Bits niedrigerer Wertigkeit der Adressen am Ausgang 17 werden über die Verbindung 17b den Leseadresseneingängen der Speicherblöcke 20-1 bis 20-4 parallel zugeführt, wie bereits erwähnt wurde. Die Bits höherer Wertigkeit am Ausgang 17 werden über die Verbindung 17a einem Decoder 18 zugeführt, der für jede Bitkombination auf der Verbindung 17a ein entsprechendes Signal auf einem anderen seiner Ausgänge 19-1 bis 19-4 erzeugt, die mit den Lesesteuereingängen der entsprechenden Speicherblöcke 20-1 bis 20-4 verbunden sind. Ein Speicherblock, der über seinen Lesesteuereingang ein entsprechendes Signal erhält, liest die Daten an der über die Verbindung 17b zugeführten Adresse aus und gibt diese Daten über den Ausgang 21 ab.

Bei der bisherigen Beschreibung wurde angenommen, daß jeder der Speicherblöcke 20-1 bis 20-4 getrennte Schreib- und Leseadresseneingänge sowie getrennte Dateneingänge und Datenausgänge aufweist, wie dies beispielsweise bei dem integrierten ECL-Speicherbausteinen 100145 der Fall ist. Bei Speicherbausteinen mit gemeinsamen Adresseneingängen für Lesen und Schreiben muß bei jedem Speicherbaustein diesen Adresseneingängen ein Multiplexer vorgeschaltet werden, von denen jeder beispielsweise durch die entsprechende der Leitungen 15-1 bis 15-4 gesteuert den Adresseneingang auf die Schreibadresse umschaltet und im übrigen auf die Leseadresse geschaltet bleibt. Dadurch werden in allen übrigen Speicherblöcken die an der Leseadresse enthaltenen Daten gelesen, jedoch nur bei dem über
die entsprechende der Leitungen 19-1 bis 19-4 ausgewählten
Speicherblock über die Verbindung 21 abgegeben.

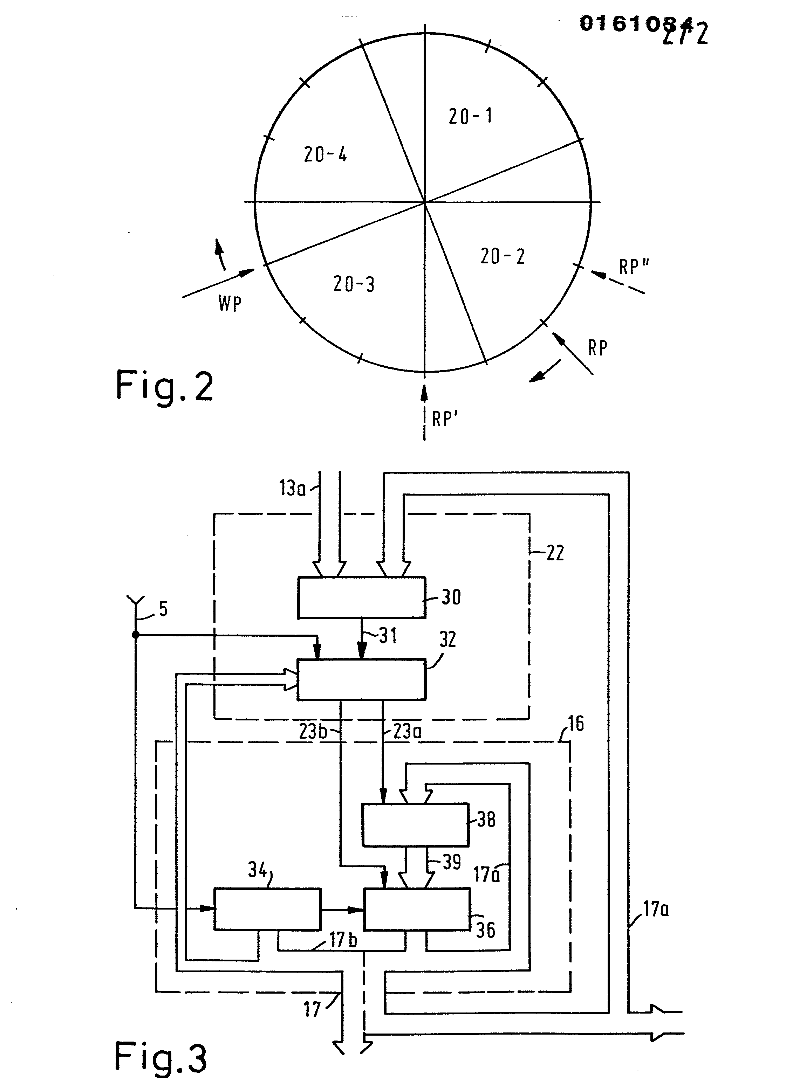

Die Schreibadressenbits höherer Wertigkeit auf der Verbindung 13a und die Leseadressenbits höherer Wertigkeit
auf der Verbindung 17a, die jeweils den zum Schreiben
bzw. zum Lesen adressierten Speicherblock 20-1 bis 20-4
bestimmen, werden außerdem einer Adressenabstandsüberwachungseinrichtung 22 zugeführt, die außerdem den lokalen
Worttakt über die Leitung 5 erhält. Diese Einrichtung 22
prüft, ob auf den beiden Verbindungen 13a und 17a übereinstimmende Bitgruppen vorhanden sind, d.h. der selbe
Speicherblock, beispielsweise 20-2, wird sowohl zum
Schreiben als auch zum Lesen adressiert. Wie ein solcher
Fall auftreten kann, soll nachfolgend anhand der Fig. 2
näher erläutert werden.

In dieser Fig. 2 sind symbolisch die aufeinanderfolgenden
Adressenstellen der aufeinanderfolgenden Speicherblöcke
20-1 bis 20-4 als Striche auf einem Kreis angedeutet, um
zu zeigen, daß sowohl die Schreibadressen als auch die
Leseadressen normalerweise aufeinanderfolgend zyklisch
durchlaufen werden. Für einen bestimmten Zeitpunkt sei
angenommen, daß zum Schreiben die mit dem Pfeil WP
bezeichnete letzte Adresse des Speicherblockes 20-3
adressiert wird, während zum Lesen eine mit dem Pfeil RP
bezeichnete Adresse innerhalb des Speicherblockes 20-2
adressiert wird. Beide Pfeile, d.h. die jeweils zum
Schreiben und zum Lesen angesteuerten Adressen, gehen
schrittweise in der bezeichneten Richtung weiter, und zwar
mit einer durch Datentakt und lokalen Takt bestimmten
Phasenverschiebung zueinander. Es ist klar, daß bei der in
Fig. 2 mit den ausgezogenen Pfeilen angegebenen Adressierung keine Schwierigkeiten auftreten, da der Abstand zwischen Schreibadresse WP und Leseadresse RP größer ist als die Anzahl Adressen eines Speicherblocks, so daß das Schreiben und das Lesen in verschiedenen Speicherblöcken erfolgt.

Wenn nun angenommen wird, daß aufgrund von Phasenschwankungen zwischen Datentakt und lokalem Takt der letztere eine höhere Momentanfrequenz hat, so wird die Folge der Leseadressen schneller durchlaufen als die Folge der Schreibadressen, und nach einer Anzahl vollständiger Adressenzyklen über alle Speicherblöcke entsprechend einer Anzahl vollständiger Rotationen der Zeiger RP und WP holt der letztere den ersteren so weit ein, wie es durch den gestrichelten Pfeil RP' angedeutet ist. Dies bedeutet, daß beim Lesen die Adressierung gerade auf die erste Adresse des Speicherblockes 20-3 gegangen ist, während die letzte Adresse dieses Speicherblockes gerade noch durch die Schreibadresse WP angesteuert wird. Da die Phasenschwankungen zwischen Datentakt und lokalem Takt relativ langsam sind, tritt in diesem Falle nur eine sehr kurzzeitige Überlappung des Endes eines Schreibvorganges mit dem Anfang eines Lesevorganges in dem selben Speicherblock 20-3 auf, die sich ohne weitere Maßnahmen jedoch jeweils beim Übergang der Leseadresse auf einen neuen Speicherblock vergrößern würde, bis schließlich die einwandfreie Funktion des Speichers nicht mehr gewährleistet ist.

Um dies zu vermeiden, wird in der Einrichtung 22, sobald die Überlappung von Schreibvorgang und Lesevorgang in dem selben Speicherblock, d.h. eine zeitliche Überlappung der selben Bitkombination an den beiden Eingängen der Einrichtung 22, ausreichend lange ist, um aufgrund der begrenzten Schaltgeschwindigkeit der in der Einrichtung 22 verwendeten Bauelemente eine Reaktion auszulösen, anschließend über die Leitung 23 ein entsprechendes Signal zum Leseadressengenerator 16 geleitet, wodurch dieser einen Sprung in den Adressenbits höherer Wertigkeit durchführt, so daß anschließend die nächste Adresse in dem Speicherblock 20-2 entsprechend dem gestrichelten Pfeil RP" angesteuert wird. Dadurch wird nachfolgend zwar eine bereits gelesene Gruppe von Daten nochmals ausgelesen, jedoch ist dies bei beliebigem Aufbau eines Pufferspeichers begrenzter Kapazität unvermeidbar. Auf diese Weise ist jedoch erreicht worden, daß der Abstand zwischen Schreibadresse und Leseadresse wieder größer geworden ist, so daß zumindest für eine längere Zeit Schreibvorgänge und Lesevorgänge in verschiedenen Speicherblöcken erfolgen.

Dabei ist angenommen, daß ein Adressensprung um jeweils einen Speicherblock an die folgende Adresse darin ausgeführt werden soll. Wenn die Eingangsdaten im Rahmen organisiert sind, wie dies bei Zeitmultiplexsystemen üblich ist, und die Eingangsdaten einschließlich der Synchronisierinformation eines Rahmens belegen mehrere Speicherblöcke, ist die Durchführung eines Adressensprunges über diese Anzahl Speicherblöcke zweckmäßiger.

In Fig. 3 ist der Aufbau des Leseadressengenerators 16 und der Adressenabstandsüberwachungseinrichtung 22 näher angegeben, um deren Zusammenwirken bei der Ausführung eines Adressensprunges in der Adressierung der Speicherblöcke besser erläutern zu können. Die Adressenabstandsüberwachungseinrichtung 22 enthält einen Vergleicher 30, dem die Bits höherer Wertigkeit der Schreibadresse über die Verbindung 13a und die entsprechenden Adressenbits der Leseadresse über die Verbindung 17a zugeführt werden und der bei Gleichheit beider Adressen auf der Leitung 31 ein entsprechendes Signal an eine Synchronisierschaltung 32 abgibt. Diese erhält außerdem den internen Worttakt über die Leitung 5, der den Leseadressentakt darstellt, und synchronisiert das Signal auf der Leitung 31 mit diesem internen Takt, damit der Adressensprung bei der Adressierung der Speicherblöcke nicht zwischen zwei Lesetakten auftreten kann, sondern immer nur mit bzw. unmittelbar nach einem Lesetakt. Außerdem erhält die Synchronisierschaltung 32 zumindest einen Teil der Adressenbits auf der Verbindung 17b, insbesondere das Adressenbit höchster Wertigkeit, um daraus zu bestimmen, in welche Richtung der Adressensprung in dem Leseadressengenerator 16 ausgeführt werden soll. Diese Richtung des Adressensprunges wird durch das Signal auf der Leitung 23a angegeben, während die Leitung 23b bei jedem Adressensprung unabhängig von der Richtung ein entsprechendes Signal führt. Die Richtung des Adressensprunges kann in der Synchronisierschaltung 32 tatsächlich aus dem Signal des höchsten Adressenbits der Adressen innerhalb der Speicherblöcke auf der Verbindung 17b bestimmt werden, denn wenn dieses Adressenbit den Wert "1" hat, wenn das Signal auf der Leitung 31 erscheint, bedeutet dies, daß die Leseadresse gerade die letzte Adresse in einem Speicherblock ansteuert, während die Schreibadresse auf die erste Adresse dieses Speicherblockes springt, d.h. die Schreibadressen folgen mit höherer Frequenz aufeinander als die Leseadressen, so daß der Adressengenerator 16 anschließend einen Speicherblock überspringen muß bzw. von der ersten Adresse des nächsten Speicherblockes auf die zweite Adresse des übernächsten Speicherblockes springen muß. Umgekehrt, wenn das Adressenbit höchster Wertigkeit auf der Verbindung 17b den Wert "0" beim Auftreten des Signals auf der Leitung 31 hat, bedeutet dies, daß die Leseadresse die erste Adresse eines Speicherblockes ansteuert, während dessen letzte Adresse noch von der Schreibadresse angesteuert wird, d.h. die Folge der Schreibadressen bzw. der Eingangstakt ist höher als der Lesetakt entsprechend dem internen Takt, und der Adressengenerator 16 muß einen Speicherblock wiederholt ansteuern, um den Adressenabstand zu vergrößern.

Der Adressengenerator 16 enthält zwei Zähler 34 und 36, von denen der Zähler 34 den internen Worttakt über die Leitung 5 als Zähltakt erhält und sein Übertragssignal an den Zähleingang des Zählers 36 abgibt. Die über die Verbindung 17b abgegebene Zählerstellung des Zählers 34 führt über den Ausgang 17 des Adressengenerators 16 zu den Leseadresseneingängen der Speicherblöcke 20-1 bis 20-4, wie in Fig. 1 dargestellt ist. In entsprechender Weise führen die Ausgänge des Zählers 36, die den zum Lesen zu adressierenden Speicherblock bestimmen, über die Verbindung 17a ebenfalls über den Ausgang 17 des Adressengenerators 16 zu dem Dekoder 18, wie in Fig. 1 dargestellt ist, sowie zu dem einen Eingang der Einrichtung 22, und außerdem führt diese Verbindung innerhalb des Adressengenerators auf den Adresseneingang eines Festwertspeichers 38. Dieser weist noch einen Eingang für ein weiteres Adressenbit auf, an dem die Leitung 23a von der Einrichtung 22 angeschlossen ist, deren Signal den Adressenbereich des Festwertspeichers 38 in zwei Teile aufteilt. In dem einen Teil ist an jeder über die Verbindung 17a zugeführten Adresse die folgende Adresse enthalten, die ausgelesen und über die Verbindung 39 einem Parallelsetzeingang des Zählers 36 zugeführt, so daß dieser bei einem Signal auf der Leitung 23b auf diese folgende Adresse gesetzt wird und somit einen Sprung vorwärts bei der Adressierung der Speicherblöcke ausführt. In dem anderen, durch das Signal auf der Leitung 23a bestimmten Teil des Adressenbereichs ist für jede über die Verbindung 17a zugeführte Adresse die vorhergehende Adresse gespeichert, die dann ebenfalls über die Verbindung 39 dem Parallelsetzeingang des Zählers 36 zugeführt wird, so daß dieser bei einem anschließenden Signal auf der Leitung 23b einen Sprung rückwärts bei der Adressierung der Speicherblöcke ausführt. Auf diese Weise sind die Adressensprünge einfach steuerbar. Durch einen entsprechenden Inhalt des Festwertspeichers 38 kann auch ein Sprung um mehr als einen Speicherblock ausgeführt werden, wenn ein Rahmen von Eingangsdaten mehrere vollständige Speicherblöcke belegt. Falls das Verhältnis der Anzahl Eingangsdaten und Synchronisierinformation je Rahmen zur Anzahl Adressen je Speicherblock oder umgekehrt nicht ganzzahlig ist, muß auch ein Adressensprung der Adressen innerhalb der Speicherblöcke, d.h. ein Sprung des Zählers 34 durchgeführt werden, was durch einen weiteren, nicht dargestellten Festwertspeicher erreicht werden kann, der von dem Adressenteil auf der Verbindung 17b und ggf. der Leitung 23a adressiert wird und dessen Datenausgang auf Parallelsetzeingänge des Zählers 34 führt.

0161034

<u>PATENTANSPRÜCHE</u>

1.    Pufferspeicher für eine Eingangsleitung einer digitalen Vermittlungsstelle zum Ausgleich von Phasenschwankungen (Wander und Jitter) zwischen dem von den Eingangsdaten auf der Eingangsleitung mitgeführten Datentakt und dem lokalen Takt der Vermittlungsstelle, mit einer Schreib-Lese-Steuereinrichtung, die die ankommenden Daten mit dem Datentakt aufeinanderfolgend in den Pufferspeicher einschreibt und mit dem lokalen Takt zeitlich verschoben ausliest, und mit einer Abstandsüberwachungseinrichtung, die den Abstand zwischen derjenigen Speicherstelle, die zu einem bestimmten Zeitpunkt geschrieben wird, und derjenigen Speicherstelle, die im wesentlichen gleichzeitig gelesen wird, überwacht und bei Unterschreiten dieses Abstandes unter einen vorgegebenen Wert durch Überspringen einer Anzahl Speicherstellen beim Schreiben und/oder Lesen den Abstand wieder vergrößert, <u>dadurch</u> <u>gekennzeichnet,</u> daß der Pufferspeicher mehrere getrennt voneinander aufeinanderfolgend adressierbare Speicherblöcke (20) enthält und daß die Abstandsüberwachungseinrichtung (22) den Abstand zwischen dem Schreiben und dem Lesen nur beim Übergang mindestens eines der Vorgänge von dem einen Speicherblock auf einen anderen Speicherblock überwacht und bei Unterschreiten des vorgegebenen Abstandswertes in der Schreib-Lese-Steuereinrichtung (12, 16) einen derartigen Adressensprung in der Adressierung der Speicherblöcke auslöst, daß der Abstand zwischen dem Schreiben und dem Lesen vergrößert wird.

0161034
PHD 84-067EP

2. Pufferspeicher nach Anspruch 1,
dadurch gekennzeichnet, daß die Abstandsüberwachungseinrichtung (22) bei gleichzeitiger Adressierung des
selben Speicherblocks (z.B. 20-1) sowohl beim Schreiben
als auch beim Lesen mindestens während des Bruchteils
einer Taktperiode den Adressensprung auslöst.

3. Pufferspeicher nach Anspruch 1 oder 2,
dadurch gekennzeichnet, daß die Schreib-Lese-Steuereinrichtung (12, 16) den Adressensprung nur bei den Leseadressen durchführt.

4. Pufferspeicher nach einem der Ansprüche 1 bis 3 für
Eingangsdaten, die als aufeinanderfolgende Rahmen,
bestehend aus jeweils einer gleichen Anzahl Datenbits
sowie aus dazwischen angeordneten, die Rahmen bestimmenden
Synchronisierinformationen, eintreffen,
dadurch gekennzeichnet, daß der Adressensprung von
Eingangsdaten an einer bestimmten Stelle eines Rahmens zu
den Eingangsdaten an der gleichen bzw. folgenden Stelle
eines anderen Rahmens erfolgt.

Fig.1

Fig.2

Fig.3

0161084

2/2

2-II-PHD 84-067